# EUROPEAN PATENT SPECIFICATION

(11) **EP 0 593 649 B1**
(45) Date of publication and mention of the grant of the patent: **22.04.1998**
(21) Application number: 92915588.5
(22) Date of filing: 06.07.1992
(51) Int. Cl.: F24J 2/02

(54) **EQUIPMENT FOR UTILIZING SOLAR ENERGY**
EINRICHTUNG FÜR DIE NUTZUNG VON SOLARENERGIE
MATERIEL POUR L'EXPLOITATION DE L'ENERGIE SOLAIRE

(30) Priority: 05.07.1991 HU 229291
(43) Date of publication of application: 27.04.1994
(73) Proprietor: GÖDE, Gabor, H-1126 Budapest (HU)
(72) Inventor: GÖDE, Gabor, H-1126 Budapest (HU)
(74) Representative: Viering, Jentschura & Partner
(86) International application number: HU9200027
(87) International publication number: WO9301457

(56) References cited:
- EP-A- 0 221 575
- DE-A- 3 505 248
- US-A- 4 454 865
- US-A- 4 662 354
- F.Kreith et al., "Principles of Solar Engineering", McGraw- Hill 1978, page 274

## Description

The invention relates to an equipment for utilizing solar energy, primarily for meeting household energy demands, comprising at least one collector unit adjustable by means of a mover unit for receiving insolation and having an absorber unit mounted on it, at least one heat utilizing device, a conduit network comprising a forward duct and a back duct connecting the absorber unit to the heat utilization device, and heat carrier fluid circulating in the conduit network, wherein the conduit network is provided with at least one valve controlling the circulation of the heat carrier fluid.

Actually, decrease of energy carrier resources and rise of power generation costs induce endeavours to solar energy utilisation in ever wider domains.

There exist solar energy utilization systems involving collectors with plane or shell of revolution-shaped specular surfaces supplying heat power mainly for water heating or room heating.

There is a relatively narrow field of utilisation for energy transformers producing electric power from solar heat energy.

While there are some simple devices helping cooking activities.

USA patent specification reg.no. 4,603.685 refers to a solar water boiler. USA patent specification reg. no. 4,615.328 rerers to a heating, equipment, while again, USA patent specification reg. no. 4.644.934 refers to a combined heating - water boiler equipment. BRD publishing paper no. 2,172.394 presents a solar power generator, while respective French, and German patent specifications reg. nos 2,588.644 and 3,611,375 refer to cooking utensils utilizing solar heat energy.

A common shortcoming of known device types is unsuitability to complex supply of household power needs. Another inconvenient is not to solve operation of household cooking equipment by solar heat power.

Another shortcoming is unability to store the absorbed heat energy, to be transferred at the due moment to the heat utilizing device. As a result, they can only be applied in case of unclouded, clear sky, in particular, in summer season, significantly restricting e.g. heat energy obtained in the winter heating season, and efficiency of the heating unit.

The German Patent Application DE 35 05 248 discloses a heat storage filled with heat carrier fluid heated by solar collectors. A plate support made of a material with good heat-conducting properties is arranged on the upper part of the heat storage. A cooking plate is rotatably arranged on the top of the plate support. The surfaces of the cooking plate and the plate support facing each other are formed with matching inclined sections such that by rotating the cooking plate relative to the plate support the contact surface between them can be varied, thereby varying the amount of heat conducted to the cooking plate.

The solar energy utilization equipment according to the invention primarily provides an arrangement for a cooking range wherein the energy conducted to it by the heat carrier fluid may be effectively varied and secondarily a special interconnection of heat utilizing devices is provided in a complex system to improve the efficiency of the complex solar energy utilizing system eliminating drawbacks of available solutions.

To attain the object of the invention, the solar energy utilizing equipment according to the preamble is characterized in that the heat utilization device or at least one of the heat utilization devices, repectively, is a cooking range with at least one hollow hot plate, inside the hollow of the hot plate are disposed a baffle and a flow control piece and the hot plate is provided with a valve for adjusting the volume of heat carrier fluid flowing through the hollow. The conduit network may comprise a circulator.

According to a preferred embodiment of the solar energy utilization equipment the cooking range comprises a baking unit.

Preferably the cooking range is connected to a heat storage unit, which, preferably, comprising a collector tank and a heat storage medium in the collector tank. Preferably this heat storage medium consists of a complex of steel balls.

In a further embodiment of the invention one of the heat utilizing devices is an energy transformer, comprising a heat exchanger connected to the forward duct, a turbo generator connected to the heat exchanger by a steam duct, a feed-water tank, a feeding pump, wherein a condenser connected with its inlet to a coldwater pipe and with its outlet to an other heat utilizing device like a water boiler is inserted between the turbo generator and, advisably, the feed-water tank to use waste heat of the energy transformer. Preferably this energy transformer further comprises a cooler connected to the condensor.

According to a still further embodiment of the invention the collector unit comprises a specular unit, a support for the specular unit, wherein the absorber unit is connected to the specular unit, and sensors mounted on the specular unit of the collector unit and connected to a control unit controlling the mover unit for rotating the collector unit.

According to one prefereed embodiment the specular unit of the collector unit is formed like a concave cylindrical shell and is provided with a closing disk on each one of its both ends, the closing disks are connected to the support via bedding units arranged in the central orifice of each closing disk and at least one of the closing disks is connected through a transmission unit to the mover unit. In a favourable construction an inlet stub and an outlet stub of the absorber unit are led through the bedding units.

According to an alternative preferred embodiment the specular unit is a disk-shaped shell with a receiving seat at its bottom, wherein the support has a central supporting rod fitted into the receiving seat and the mover unit has mover rods joined with the specular unit by hinges. The mover unit may comprise a driving clockwork for driving the mover rods. The absorber unit is kept in the focus of the specular unit.

The solar energy utilizing equipment according to the invention has the advantage that - because of the peculiar design and novel interconnection of heat utilization device or devices - its utilization permits exploitation of solar heat energy at a significantly increased efficiency, or a wider range, and - applying an adequately dimensioned heat energy storage equipment - at almost any time of the day, while in occurrence of a properly designed and dimensioned energy transformer equipment, it provides for heat and electric power supply of any household equipment consuming power.

Another convenience is the autonomy of the solar energy utilization equipment according to the invention from the aspect of power supply, requiring no other power source or energy carrier but solar energy.

Another advantage is that the collector unit - upon breakdown of some part unit - turns - or may be turned - to a position preventing overheating of the heat carrier fluid. Thereby this equipment is progressive both for accident safety and for property and life safety.

It is favourable that the solar tracking operation of the collector unit is controlled by a control equipment automatically, by pre-written programs fed in, or by sensors.

In the following, the invention is presented more detailed on drawings relying on constructed examples.
- Fig. 1 -: Flowchart or a possible variety of solar energy utilization equipment
- Fig. 2 -: Longitudinal section of the range with heat storage unit
- Fig. 3 -: Cross section of another constructed form of the heat storage unit
- Fig. 4 -: Bird's-eye-view of an arrangement of hot plates on the range
- Fig. 5 -: Side-view sketch of the transformer and the connected heat utilization device of the solar energy utilization equipment according to the invention
- Fig. 6 -: Sketch of a possible form of construction of the collector unit and the joining mover unit
- Fig. 7 -: Another sketch of a constructed form of the collector unit and the connected mover
- Fig. 8 -: Sketch of arrangement of a mover.

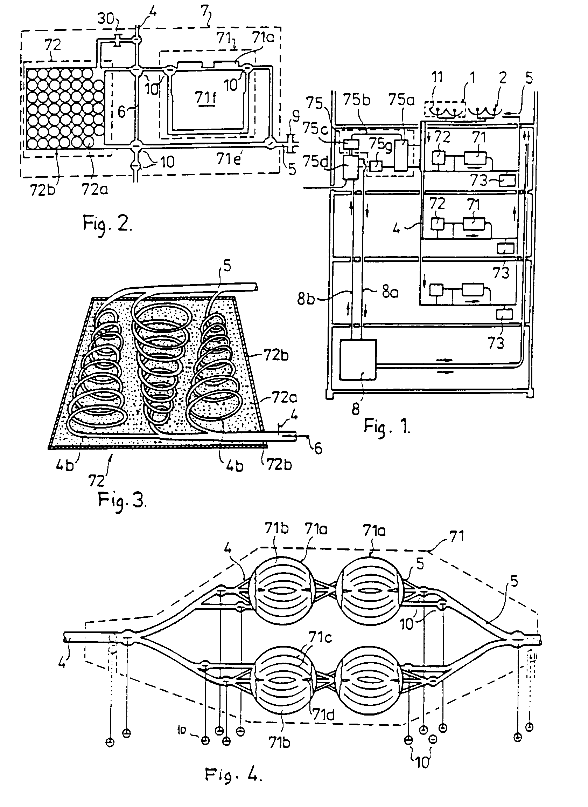

A solar energy utilizing equipment for the complex power supply of a multistorey building is seen in Fig. 1. In the top there are collector units /1/ of that the number and the shaping of specular units /11/ may be rather different according to the required output.

Specular units /11/ are joined by absorber units /2/ connected by forward ducts /4/ and back ducts /5/ to ranges /71/, heat storage units /72/, heating units /73/ and transformer to electric power /75/.

Figure 1 clearly shows the builtup of transformer /75/ comprising a heat exchanger /75a/, a turbogenerator /75c/, a condenser /75d/, and in the actual form, a feedwater tank /75g/ in closed circuit. Heat exchanger /75a/ is connected by steam duct /75b/ to turbogenerator /75c/, while the very transformer /75/ is integrated to the solar energy utilising equipment by a forward duct /4/. Condenser /75d/ is connected by inlet pipe /8a/ and return pipe /8b/ to the large-size tank /8/ for hot water supply. Flow in the conduits is easy to maintain by means of circulators /9/ omitted in Fig. 1.

Heat utilizing device in Fig. 2 consists of range /71/ joining forward duct /4/ - with the intermediary of valves /10/ and pump /30/, and of heat storage unit /72/. Heat storage unit /72/ comprises collector tank /72b/ filled with heat storage medium /72a/. Material of heat storage medium /72a/ may be solid or liquid. In the actual example of construction, the collector tank /72b/, with a good insulation coating, is filled with a bulk of small steel balls.

Valves /10/ and pump /30/ installed at different places in forward duct /4/, as wall as user-operated circulator /9/ inserted into - in relation to this heat utilisation device - back duct /5/ offers a possibility to heat hot plate /71a/ or baking chamber /71f/ by baking unit /71e/. This may be made either directly by heat carrier fluid /6/ flowing from forward duct /4/ to range /71/, or by heat carrier fluid /6/ warmed by heat volume in heat storage unit /72/.

A heat storage unit /72/ where coils /4b/ are branching off forward duct /4/ and lead to back duct /5/ is seen in Fig. 3. Making the heat carrier fluid /6/ to flow through these coils /4b/ permits a more intensive heat transfer between heat carrier fluid /6/ and solid granular or liquid heat storage medium /72a/ in collector tank /72b/.

Layout and inner builtup of hot plates /71a/ of range /71/ are seen in Fig. 4. Hot plates /71a/ are connected by forward duct /4/ branching to three in their vicinity, and back duct /5/ of a similar constitution, to the conduit network of the solar energy utilizing equipment. Hot plates /71a/ include hollows /71b/ filled with heat carrier fluid /6/ of that the flow speed and direction are controlled by baffles /71c/ and flow control pieces /71d/.

Volume of heat carrier fluid /6/ flowing through hot plates /71a/ may be controlled by means of valves /10/, advisably, by ball cocks.

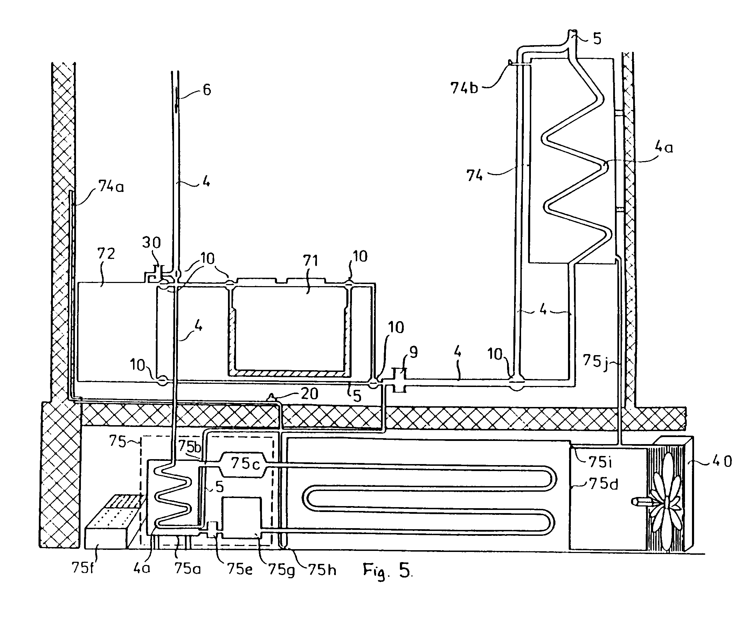

Figure 5 shows the connection arrangement of the energy transformer /75/ of the solar energy utilising equipment according to the invention, and of the connected water boiler /74/.

Energy transformer /75/ is seen to join forward duct /4/ conveying hot heat vehicle /6/ via heat exchanger /75a/. It also appears that in the small-size heat exchanger /75a/ forward duct /4/ is formed into coil /4a/ to improve heat transfer efficiency.

The part of forward duct /4/ emerging from heat exchanger /75/ to be considered back duct /5/ forwards already less warm heat carrier fluid /6/ by means of circulator /9/ forcing it to flow - depending on the position of valve /10/ - either to coil /4a/ of forward duct /4/ of water boiler /74/, or to bypass water boiler /74/, directly into central back duct /5/. Condenser /75d/ connected to energy transformer /75/, inserted between its turbogenerator /75c/ and feedwater tank /75g/, utilizes waste heat from energy transformer /75/.

Running coldwater pipe /74a/ joins inlet point /75h/ of condenser /75d/, while outlet point /75i/ is connected to water boiler /74/ via intermediate pipe length /75j/.

Condenser /75d/ may still comprise cooling unit /40/, actually, with a fan. It serves for cooling the water heated more than admissible, preventing thereby breakdown of water boiler /74/ and condenser /75d/ due to excessive heat load.

It is also seen from Fig. 5 that the liquid in the closed circuit of energy transformer /75/ is kept circulating by feed pump /75e/ between heat exchanger /75a/ and feedwater tank /75g/.

While turbogenerator /75c/ is joined by accumulators /75f/ storing transformer electric power. During operation of the solar energy utilising equipment, heat carrier fluid /6/ heated in absorber units /2/ of collector units /1/ flow either by gravity or in forced flow due to circulator /9/ into forward duct /4/, thence, by activating the proper valve /10/, to the wanted heat utilizing device. Some of valves /10/ are advisably switched automatically via controls /20/ e.g. thermostats or pressure sensors.

Let us first consider range /71/ combined with heat storage unit /72/. By adjusting different valves /10/, range /71/ may be made to directly receive heat carrier fluid /6/ via forward duct /4/ supplying any of hot plates /71a/ or baking unit /71e/.

At a different position of valves /10/ and with pump /30/ on, heat carrier fluid /6/, flows only across collector tank /72b/ of heat storage unit /72/, warming up heat storage medium /72a/, "storing" thereby part of solar heat energy. This stored heat energy may be utilized at a different switching of valves /10/, primarily for supplying hot plates /71a/ and baking unit /71e/ of range /71/ with hot heat carrier fluid /6/, but by means of a properly dimensioned heat storage unit /72/, even water boiler /74/ may be operated.

Beyond bifurcation belonging to range /71/, forward duct /4/ getting inside energy transformer /75/ forms coil /4a/. Thereby heat carrier fluid /6/ is more efficient in heating water of heat exchanger /75a/. Water brought to boiling in heat exchanger /75a/ gets through steam duct /75b/ to turbogenerator /75c/ where heat energy is transformed to power to be stored in accumulator /75f/. Expanded steam flows from turbogenerator /75c/ into condenser /75d/ to be condensed there, transmitting its remaining "waste heat" to running coldwater flowing into condenser /75d/ through coldwater pipe /74a/ across inlet point /75h/.

Water heated thereby flows through intermediary pipe length /75j/ to water boiler /74/ and hence through warmwater pipe /74b/ to the user.

Provided warm water flowing into water heater /74/ has not yet the set temperature, by switching valve /10/ on, also heat carrier fluid /6/ may be directed to water boiler /74/.

If, however, water gets excessively warmed in condenser /75d/, then cooling unit /40/ begins to function, to reduce thereby hot water temperature.

Operation of some heat utilizing devices /7/ and a possible version of the new connection arrangement as part of the invention are shown in Fig. 5.

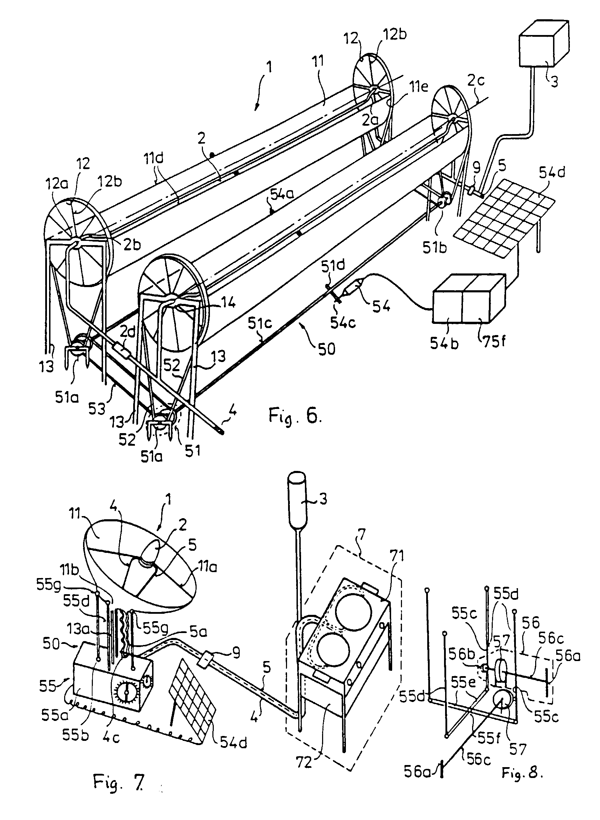

Of course, also several similar heat utilization devices /7/ may be applied, and they can be differently arranged, to comply with demands. Figures 6, 7 and 8 present a collector unit variety each /1/, with the rotating mover /50/.

The version in Fig. 6 shows collector units /1/ having cylindrical shell-shaped specular units /11/. An arbitrary number of collector units /1/ may be interconnected by junctions /2d/ connecting back duct lengths /5/ joining inlet stubs /2a/ of tubular absorber units /2/, and forward duct lengths /4/ emerging from outlet stubs /2b/ of absorber units./2/. Such solar energy utilizing equipment comprising collector units /1/ suits power supply of several dwellings, or in given cases, even of minor industrial establishments.

To compensate thermal expansion, trimming tank /3/ is connected to back duct /5/.

Ends /11e/ of specular unit /11/ bear closing disks /12/ connected by spokes /12b/ to midule parts with central orifice /12a/.

Bedding units /14/ connecting supporting fittings /13/ to closing disk /12/ fit into central orifice /12a/. Bedding units /14/ facilitate for specular unit /11/ to turn about principal axis /2c/ of absorber unit /2/ - that is at the same time focus line of specular unit /11/ - in order to function in solar tracking operation in case of a proper fundamental adjustment.

Also, in Fig. 6 it is seen that inlet stub /2a/ and outlet stub /2b/ of absorber unit /2/ cross bedding units /14/. potation of collector unit /1/ for solar tracking may be achieved by mover /5C/. Closing di3ks /12/ join first disks /51a/ of transmission part units /51/ across primary transmission units /52/. These first disks /51a/ are connected to each other, as well as to second disks /51b/ and transmission unit /51d/ via connecting shaft /51c/ set in bearings to supporting legs /15/ fastened at both ends of collector unit /1/. Connecting shaft /51c/ provides for synchronicity between driving and driven parts. Transmission unit /51d/ joins electromotor /54/ across driving unit /54c/.

Power supply of electromotor /54/ may be by solar cell /54d/, or by connected accumulator /75f/, or by another accumulator storing power from transformer /75/ mentioned above.

Electromotor /54/ is operated by control unit /54b/, supplied with power as above. Information for control unit /54b/ is supplied by sensors /54a/ mounted on rim /11d/ of specular unit /11/. Combined moving of several collector units /1/ may be made and synchronized by secondary transmission units /53/ crossing second disks /51b/ of transmission part units /51/.

To provide for adequate operation of mover /50/ it is convenient to apply ribbed or toothed primary transmission units /52/ and secondary transmissions /53/, as well as first disks /51a/, second disks /51b/, transmission unit /51d/ and driving unit /54c/ made into gears.

Collector unit /1/ seen in Fig. 6 functions as follows. Collector units /1/ are to be located with main shafts /2c/ of absorber units /2/ lying in N-S direction. Now, sensors /54a/ mounted on rims /11d/ of specular unit /11/ send signals to control unit /54b/ depending on sunshine intensity.

Control unit /54b/ evaluates impulse and actuates electromotor /54/. Driving unit /54c/ of electromotor /54/ rotates transmission unit /51d/, and with it, connecting shart /51c/, together with transmission part unit /51/ fastened to it. This transmission part unit /51/ driven by electromotor /54/ drives, by means of second transmission unit /55/ - actually, an endless ribbed belt threaded across the second disk /51b/ - second disks /51b/ belonging to mover unit /50/ of the other collector units /1/, and thereby, of course, all the transmission part units /51/.

With turning of all transmission part units /51/ also first disks /51a/ move, and with the intermediary of primary transmissions /52/, force closing disks /12/, and thereby specular units /11/ fastened to them, to rotate.

The process outlined a bove is repetitive throughout the day, in conformity with the Sun's path, thereby specular units /11/ of collector units /1/ continuously follow the Sun's path, being always at the best inclination to provide for the optimum utilization of solar radiation.

A solar energy utilizing equipment of lower output with a collector unit /1/ having a shell of revolution-shaped specular unit /11/ and a mover /50/ different from those above is seen in Fig. 7.

To increase output, several collector units /1/ may be applied.

Here, specular unit /11/ of collector unit /1/ is connected to the hollow tank-shaped conic absorber unit /2/ by means of suspender /11a/. Suspender /11a/ keeps absorber unit /2/ in the focus of specular unit /11/. Forward duct /4/ starting from absorber unit /2/ and back duct /5/ returning to absorber unit /2/ comprise flexible lengths /4c/ and /5a/, spanning the distance between specular unit /11/ and casing /55a/ of support /55/ of mover /50/, expected to prevent injuries, failures due to displacement or bending of rigid forward and back ducts /4/ and /5/, respectively.

Central supporting rod /13a/ constituting support /13/ is mounted on casing /55a/. Mover rods /55d/ project from support /55/ through openings /55b/ of casing /55a/. Central supporting rod /13a/ fits into reveiver seat /11b/ in the midline of specular unit /11/, while mover rods /55d/ join specular unit /11/ by means of ball and socket joints /55g/.

The solar energy utilizing equipment seen in Fig. 7 feeds a single heat utilizing device, actually, a range /71/ combined with a heat storage unit /72/. There is a possibility to connect another heat utilizing device, such as a water boiler to the heat circuit. Circulator /9/ for circulating heat vehicle /6/ obtains power supply from solar cell /54d/.

Principal units of mover /50/ omitting casing /55a/ are seen in Fig. 8. Apparently, mover rods /55d/ are connected by double two-armed level /55e/ hinged at mid-point /55f/. Mover rods /55d/ pertaining to two-armed levers /55e/ each are racked /55c/.

Racks /55c/ are engaged by gears /56b/ mounted on engaging shafts /56c/. Also drive clockworks /57/ and winding arms /56a/ are fastened to engaging shaft /56c/.

The complex of winding arm/56a/, engaging shaft /56c/, gear /56b/ and drive clockwork /57/ constitute the winding mechanism /56/.

In this variant of the invention, collector unit /1/ can be brought to motion by setting on winding mechanism /56/, to suit sun-tracking operation. Driving clockwork /57/ rotates engaging shaft /56c/ and gear /56b/. Revolving gear /56b/ vertically moves rack /55c/ causing opposite displacement or opposite mover rod /55d/ by means of connected two-armed level /55e/. Mover rods /55d/ joining specular unit /11/ via ball and socket joints /55g/ at last rotate specular unit /11/ around central supporting rod /13a/. The way of moving in Fig. 8 may be replaced by automatically controlled electric drives, according to principles outlined for Fig. 6.

Solar energy utilizing equipment, collector unit and connection arrangement according to the invention are useful anywhere with a climate permitting and justifying wide-range utilization of solar energy.

| LIST OF ITEMS | |
|---|---|
| 1 Collector unit | 11 specular unit |
| | 11a suspender fitting |
| | 11b receiver seat /to 55d/ |
| | 11d rim /of 11/ |
| | 11e end /of 11/ |
| | 12 closing disk /band/ |
| | 12a central orifice |
| | 12b spoke |
| | 13 supporting fitting |
| | 13a central supporting rod |
| | 14 bedding unit |
| | 15 leg |
| | |
| 2 absorber unit /pipe or tank/ | 2a inlet stub |
| | 2b outlet stub |
| | 2c principal axis |
| | 2d joint |
| | |
| 3 trimming tank | |
| 4 forward duct | 4a coil |
| | 4b pipe spiral |
| | 4c flexible section |
| 5 back duct | 5a flexible section |
| 6 heat carrier fluid | |
| 7 heat utilizing device | 71 range |
| | 71a hot plate |
| | 71b hollow /of 71a/ |
| | 71c baffle /2h/ |
| | 71d flow control piece /2i/ |
| | 71e baking unit |
| | 71f baking chamber |
| | 72 heat storage unit |
| | 72a heat storage medium /solid |
| | granular fluid, balls/ |
| | 72b collector tank |
| | 73 heating unit |
| | 74 water boiler |
| | 74a cold water pipe |
| | 74b warm water pipe |
| | 75 energy transformer |
| | 75a heat exchanger /7/ |
| | 75b steam duct |
| | 75c turbogenerator |
| | 75d condenser |
| | 75e feed pump |
| | 75f energy storage |
| | 75g feedwater tank /14/ |
| | 75h inlet point |
| | 75i outlet point |
| 8 tank | 8a inlet pipe /13/ |
| | 8b return pipe /11/ |
| 9 circulator | |
| 10 valve | |
| 20 control /thermostat/ | |
| 30 pump /2/c/ | |
| 40 cooler /with fan/ | |
| 50 mover | 51 transmission part unit /21/ |
| | 51a first disk |
| | 51b second disk /toothed/ |
| | 51c coupling shart /24/ |
| | 51d transmission unit |
| | 52 primary gear /19 |
| | 53 secondary gear 19/ |
| | 54 electromotor |
| | 54a sensor |
| | 54b control unit |
| | 54c drive unit /25/ |
| | 55 supporting structure |
| | 55a casing |
| | 55b opening |
| | 55c rack |
| | 55d mover rod |
| | 55e two-armed lever |
| | 55f mid-point /of |
| | 55e/ 55g hinge |
| | 56 winder |
| | 56a winding arm |
| | 56b gear |
| | 56c engaging shaft |
| | 57 clockwork |

## Claims

1. Solar energy utilizing equipment, especially for meeting household power demands, comprising
at least one collector unit (1) adjustable by means of a mover unit (50) for receiving insolation and having an absorber unit (2) mounted on it,
at least one heat utilizing device (7),
a conduit network comprising a forward duct (4) and a back duct (5) connecting the absorber unit (2) to the heat utilization device, and
heat carrier fluid (6) circulating in the conduit network, wherein the conduit network is provided with at least one valve (10) controlling the circulation of the heat carrier fluid,
**characterized in that**
the heat utilization device (7) or at least one of the utilization devices, repectively, is a cooking range (71) with at least one hollow hot plate (71a),
inside the hollow (71b) of the hot plate (71a) are disposed a baffle (71c) and a flow control piece (71d), and said valve (10) controlling the volume of heat carrier fluid (6) flowing through the hollow (71b) of the hot plate (71a).

2. Solar energy utilizing equipment according to claim 1, characterized in that the cooking range (71) comprises a baking unit (71e).

3. Solar energy utilizing equipment according to claim 1 or 2, characterized in that the cooking range (71) is connected to a heat storage unit (72).

4. Solar energy utilizing equipment according to claim 3, characterized in that the heat storage unit (72) comprises a collector tank (72b) and a heat storage medium (72a) in the collector tank (72b).

5. Solar energy utilizing equipment according to claim 4, characterized in that the heat storage medium (72a) consists of a complex of steel balls.

6. Solar energy utilizing equipment according to one of the claims 1 to 5, characterized in that one of the heat utilizing devices is an energy transformer (75) comprising a heat exchanger (75a) connected to the forward duct (4), a turbo generator (75c) connected to the heat exchanger by a steam duct (75b), a feed-water tank (75g), a feeding pump (75e), wherein a condenser (75d) connected with its inlet (75h) to a coldwater pipe (74a) and with its outlet (75i) to an other heat utilizing device is inserted between the turbo generator (75c) and the feed-water tank (75g).

7. Solar energy utilizing equipment according to claim 6, characterized in that a cooler (4c) is connected to the condenser (75d).

8. Solar energy utilizing equipment according to one of the claims 1 to 7, characterized in that the collector unit comprises a specular unit, a support for the specular unit, wherein the absorber unit is connected to the specular unit, and sensors (54a) mounted on the specular unit (11) of the collector unit (1) and connected to a control unit (54b) controlling the mover unit (50) for rotating the collector unit (1).

9. Solar energy utilizing equipment according to claim 8, characterized in that the specular unit (11) of the collector unit (11) is formed like a concave cylindrical shell and is provided with a closing disk (12) on each one of its both ends (11e), the closing disks (12) are connected to the support (13) via bedding units (14) arranged in a central orifice (12a) of each closing disk (12) and at least one of the closing disks (12) is connected through a transmission unit (51, 52, 53) to the mover unit (50, 54, 54c).

10. Solar energy utilizing equipment according to claim 9, characterized in that an inlet stub (2a) and an outlet stub (2b) of the absorber unit (2) are led through the bedding units (14).

11. Solar energy utilizing equipment according to claim 8, characterized in that the specular unit (11) is a disk-shaped shell with a receiving seat (11b) at its bottom, the support (13) has a central supporting rod (13a) fitted into the receiving seat and the mover unit (50) has mover rods (55d) joined with the specular unit (11) by hinges (55g).

12. Solar energy utilizing equipment according to claim 11, characterized in that the mover unit (50) comprises a driving clockwork (57) driving the mover rods (55d).

## Patentansprüche

1. Anlage zur Nutzung von Sonnenenergie, insbesondere zum Erfüllen von im Haushalt anfallenden Energieanforderungen, mit
wenigstens einer mittels einer Bewegungseinheit (50) einstellbaren Kollektoreinheit (1) mit einer daran montierten Absorbereinheit (2) zum Empfangen von Sonneneinstrahlung,
wenigstens einer Wärmenutzungsvorrichtung (7),
einem Leitungsnetz mit einer Zuleitung (4) und einer Rückleitung (5), die die Absorbereinheit (2) mit der Wärmenutzungsvorrichtung (7) verbinden, und
einem Wärmeträgerfluid (6), das in dem Leitungsnetz zirkuliert, wobei an dem Leitungsnetz wenigstens ein Ventil (10) vorgesehen ist, das die Zirkulation des Wärmeträgerfluids steuert, **dadurch gekennzeichnet**, daß
die Wärmenutzungsvorrichtung (7) bzw. wenigstens eine der Nutzungsvorrichtungen ein Küchenherd (71) mit wenigstens einer hohlen Kochplatte (71a) ist,
in dem Hohlraum (71b) der Kochplatte (71a) eine Leitwand (71c) und ein Durchflußsteuerteil (71d) angeordnet sind, und
das Ventil (10) die Menge des Wärmeträgerfluids (6) steuert, die durch den Hohlraum (71b) der Kochplatte (71a) strömt.

2. Anlage zur Nutzung von Sonnenenergie nach Anspruch 1, dadurch gekennzeichnet, daß der Küchenherd (71) einen Backofen (71e) aufweist.

3. Anlage zur Nutzung von Sonnenenergie nach Anspruch 1 oder 2, dadurch gekennzeichnet, daß der Kochherd (71) mit einer Wärmespeichereinheit (72) verbunden ist.

4. Anlage zur Nutzung von Sonnenenergie nach Anspruch 3, dadurch gekennzeichnet, daß die Wärmespeichereinheit (72) einen Sammeltank (72b) und ein Wärmespeichermedium (72a) in dem Sammeltank (72b) aufweist.

5. Anlage zur Nutzung von Sonnenenergie nach Anspruch 4, dadurch gekennzeichnet, daß das Wärmespeichermedium (72a) aus einem Komplex von Stahlkugeln besteht.

6. Anlage zur Nutzung von Sonnenenergie nach einem der Ansprüche 1 bis 5, dadurch gekennzeichnet, daß eine der Wärmenutzungsvorrichtungen ein Energiewandler (75) ist mit
einem an die Zuleitung (4) angeschlossenen Wärmetauscher (75a),
einem an den Wärmetauscher über eine Dampfleitung (75b) angeschlossenen Turbogenerator (75c),
einem Zufuhr-Wassertank (75g), und
einer Zufuhrpumpe (75e),
wobei ein Kaltwasserrohr (74a) an dem Einlaß (75h) eines zwischen dem Turbogenerator (75c) und dem Zufuhr-Wassertank (75g) eingesetzten Kondensators (75d) und dessen Auslaß (75i) an einer anderen Wärmenutzungsvorrichtung angeschlossen ist.

7. Anlage zur Nutzung von Sonnenenergie nach Anspruch 6, dadurch gekennzeichnet, daß ein Kühler (4c) an dem Kondensator (75d) angeschlossen ist.

8. Anlage zur Nutzung von Sonnenenergie nach einem der Ansprüche 1 bis 7, dadurch gekennzeichnet, daß die Kollektoreinheit eine Spiegeleinheit und eine Halterung für die Spiegeleinheit aufweist, wobei die Absorbereinheit mit der Spiegeleinheit verbunden ist, und Sensoren (54a) an der Spiegeleinheit (11) der Kollektoreinheit (1) montiert und mit einer Steuereinheit (54b) verbunden sind, die die Bewegungseinheit (50) zum Drehen der Kollektoreinheit (1) steuert.

9. Anlage zur Nutzung von Sonnenenergie nach Anspruch 8, dadurch gekennzeichnet, daß die Spiegeleinheit (11) der Kollektoreinheit (11) als konkave, zylindrische Schale ausgebildet ist, und an jedem deren beiden Enden /lle/ eine Verschlußscheibe (12) vorgesehen ist, die Verschlußscheiben (12) mit der Halterung (13) über Lagereinheiten (14) verbunden sind, die an einer Mittelöffnung (12a) jeder Verschlußscheibe (12) angeordnet sind, und wenigstens eine der Verschlußscheiben (12) über eine Getriebeeinheit (51, 52, 53) mit der Bewegungseinheit (50, 54, 54c) verbunden ist.

10. Anlage zur Nutzung von Sonnenenergie nach Anspruch 9, dadurch gekennzeichnet, daß ein Einlaßstutzen (2a) und ein Auslaßstutzen (2b) der Absorbereinheit (2) durch die Lagereinheiten (14) hindurchgeführt sind.

11. Anlage zur Nutzung von Sonnenenergie nach Anspruch 8, dadurch gekennzeichnet, daß die Spiegeleinheit (11) eine schüsselförmige Schale ist, die einen Aufnahmesitz (llb) an deren Boden aufweist, die Halterung (13) eine zentrale Haltestange (13a) aufweist, die in den Aufnahmesitz eingepaßt ist, und die Bewegungseinheit (50) Bewegungsstangen (55d) aufweist, die mit der Spiegeleinheit (11) über Gelenke (55q) verbunden sind.

12. Anlage zur Nutzung von Sonnenenergie nach Anspruch 11, dadurch gekennzeichnet, daß die Bewegungseinheit (50) ein Treiber-Uhrwerk (57) aufweist, das die Bewegungsstangen (55d) treibt.

## Revendications

1. Matériel pour l'exploitation de l'énergie solaire, en particulier pour satisfaire aux besoins d'énergie ménagers, comprenant
au moins une unité de collecteur (1) pouvant être réglée au moyen d'une unité de déplacement pour recevoir l'ensoleillement et comprenant une unité d'absorption (2) montée sur celle-ci,
au moins un dispositif utilisant la chaleur (7),
un réseau de conduites comprenant un conduit de départ (4) et un conduit de retour (5) reliant l'unité d'absorption (2) au dispositif d'utilisation de la chaleur, et
un fluide caloporteur (6) circulant dans le réseau de conduites,
le réseau de conduites étant pourvu d'au moins une soupape (10) commandant la circulation du fluide caloporteur,
caractérisé en ce que
le dispositif d'utilisation de la chaleur (7) ou au moins un des dispositifs d'utilisation, respectivement, est une cuisinière (71) comprenant au moins une plaque chauffante creuse (71a),
un déflecteur (71c) et un élément de commande d'écoulement (71d) sont disposés à l'intérieur (71b) de la cavité de la plaque chauffante (71a), et
ladite soupape (10) commande le volume de fluide caloporteur (6) s'écoulant à travers la cavité (71b) de la plaque chauffante (71a).

2. Matériel pour l'exploitation de l'énergie solaire selon la revendication 1, caractérisé en ce que la cuisinière (71) comprend une unité de cuisson (71e).

3. Matériel pour l'exploitation de l'énergie solaire selon la revendication 1 ou 2, caractérisé en ce que la cuisinière (71) est reliée à une unité d'accumulation de la chaleur (72).

4. Matériel pour l'exploitation de l'énergie solaire selon la revendication 3, caractérisé en ce que l'unité d'accumulation de la chaleur (72) comprend un réservoir collecteur (72b) et un milieu d'accumulation de la chaleur (72a) dans le réservoir collecteur (72b).

5. Matériel pour l'exploitation de l'énergie solaire selon la revendication 4, caractérisé en ce que le milieu d'accumulation de la chaleur (72a) consiste en un ensemble de billes d'acier.

6. Matériel pour l'exploitation de l'énergie solaire selon l'une quelconque des revendications 1 à 5, caractérisé en ce qu'un des dispositifs utilisant la chaleur est un convertisseur d'énergie (75) comprenant un échangeur de chaleur (75a) relié au conduit de départ (4), un turbo générateur (75c) relié à l'échangeur de chaleur par un conduit de vapeur (75b), un réservoir d'eau d'alimentation (75g), une pompe d'alimentation (75e), un condenseur (75d) relié par son entrée (75h) à un tuyau d'eau froide (74a) et par sa sortie (75i) à un autre dispositif utilisant la chaleur étant intercalé entre le turbo générateur (75c) et le réservoir d'eau (75g).

7. Matériel pour l'exploitation de l'énergie solaire selon la revendication 6, caractérisé en ce qu'un système de refroidissement (4c) est relié au condenseur (75d).

8. Matériel pour l'exploitation de l'énergie solaire selon l'une quelconque des revendications 1 à 7, caractérisé en ce que l'unité de collecteur comprend une unité réfléchissante, un support de l'unité réfléchissante, l'unité d'absorption étant reliée à l'unité réfléchissante, et des capteurs (54a) montés sur l'unité réfléchissante (11) de l'unité de collecteur (1) et reliés à une unité de commande (54b) commandant l'unité de déplacement (50) pour faire tourner l'unité de collecteur (1).

9. Matériel pour l'exploitation de l'énergie solaire selon la revendication 8, caractérisé en ce que l'unité réfléchissante (11) de l'unité de collecteur (11) a la forme d'une coquille cylindrique concave et est pourvue d'un disque de fermeture (12) à chacune de ses deux extrémités (11e), les disques de fermeture (12) sont reliés au support (13) par l'intermédiaire d'unités de montage (14) disposées dans un orifice central (12a) de chaque disque de fermeture (12) et au moins un des disques de fermeture (12) est relié par l'intermédiaire d'une unité de transmission (51, 52, 53) à l'unité de déplacement (50, 54, 54c).

10. Matériel pour l'exploitation de l'énergie solaire selon la revendication 9, caractérisé en ce qu'un tronçon d'entrée (2a) et un tronçon de sortie (2b) de l'unité d'absorption (2) traversent les unités de montage (14).

11. Matériel pour l'exploitation de l'énergie solaire selon la revendication 8, caractérisé en ce que l'unité réfléchissante (11) est une coquille en forme de disque pourvue en son fond d'un siège de réception (llb), le support (13) possède une tige de support centrale (13a) installée dans le siège de réception et l'unité de déplacement (50) possède des tiges de déplacement (55d) reliées à l'unité réfléchissante (11) par des articulation (55g).

12. Matériel pour l'exploitation de l'énergie solaire selon la revendication 11, caractérisé en ce que l'unité de déplacement (50) comprend un mécanisme d'horloge moteur (57) entraînant les tiges de déplacement (55d).
